# FASCICULE DE BREVET EUROPEEN

(11) **EP 1 565 973 B1**
(45) Date de publication et mention de la délivrance du brevet: **04.04.2007**
(21) Numéro de dépôt: 03758224.4
(22) Date de dépôt: 08.08.2003
(51) Int. Cl.: H02G 3/06

(54) **DISPOSITIF DE CONNEXION DE CANALISATIONS FLEXIBLES**
VORRICHTUNG ZUM VERBINDEN VON FLEXIBLEN ROHRLEITUNGEN
CONNECTION DEVICE FOR FLEXIBLE PIPES

(30) Priorité: 29.11.2002 FR 0215242; 11.04.2003 FR 0304786
(43) Date de publication de la demande: 24.08.2005
(73) Titulaire: SARL François Inglese, 43000 Le Puy en Velay (FR)
(72) Inventeur: INGLESE, François, F-43000 POLIGNAC (FR)
(74) Mandataire: Dupuis, François
(86) Numéro de dépôt international: PCT/FR2003/002502
(87) Numéro de publication internationale: WO 2004/051815

(56) Documents cités:
- US-A- 3 711 633
- US-A- 4 829 145
- US-A- 5 277 459
- US-A- 5 606 150
- PATENT ABSTRACTS OF JAPAN vol. 1998, no. 08, 30 juin 1998 (1998-06-30) & JP 10 084611 A (SUMITOMO WIRING SYST LTD), 31 mars 1998 (1998-03-31)

## Description

L'invention concerne un dispositif de connexion de canalisations flexibles.

L'utilisation de canalisations ou tuyauteries flexibles est bien connue dans le domaine de la construction en général, pour permettre le passage, à l'intérieur, de fils, câbles, électriques ou non, en vue de leur protection. Ces canalisations flexibles sont réalisées en un matériau plastique souple en se présentant avec une configuration en anneaux successifs disposés transversalement, ces anneaux générant une alternance de formes en saillie et en creux.

Le raccordement bout à bout de deux canalisations de ce type s'effectue actuellement, et à la connaissance du demandeur, de manière empirique. Elles sont introduites dans des tubes, manchons ou similaires par leurs extrémités et elles sont maintenues ensuite en position à l'aide d'adhésifs enroulés autour du manchon de liaison et de la partie canalisations. Cela exige d'avoir, sur place, des moyens adhésifs appropriés, un outil de découpe de ceux-ci.

On connaît l'utilisation de boîtier d'étanchéité permettant, par exemple, la protection de prises électriques et autorisant leur embranchement intérieur. Le boîtier est ainsi établi avec deux coques semi cylindriques articulées le long de leur ligne de bordures longitudinales en charnières, tandis qu'un volet complémentaire articulé permet la fermeture et le verrouillage en position du boîtier.

On connait aussi des dispositifs de connexion décrits dans les brevets US 4829145, US 5606150, US 3711633.

La démarche du demandeur a donc été de réaliser spécifiquement un dispositif de connexion applicable à des canalisations flexibles mais en prenant en considération les modalités pratiques d'utilisation sur le terrain, car les opérateurs doivent disposer, souvent en très grand nombre, ce type de raccords.

Le but recherché était ainsi de réaliser un dispositif de connexion facile à utiliser, garantissant une parfaite tenue des canalisations flexibles, d'ouverture aisée par l'opérateur et sans outil de préférence.

Un autre but recherché était de réaliser un dispositif de connexion facilement manipulable, stockable et qui puisse être positionné et fixé sur un plan d'accès au sol ou mural.

Un autre but recherché était de réaliser un dispositif de connexion qui, tout en garantissant le maintien des canalisations flexibles, soit parfaitement apte à permettre la réception de ces canalisations avec une certaine capacité de déformabilité initiale lors de la mise en place des dites canalisations.

Un autre but recherché était que le dispositif de connexion, en situation fermée, soit exempt de zones saillantes et blessantes.

Un autre but recherché était que le dispositif de connexion assure une protection totale des canalisations et de leur contenu, et ce en position fermée, ainsi qu'une étanchéité à l'environnement extérieur.

Ces buts et d'autres encore ressortiront bien de la suite de la description.

Selon l'invention, le dispositif de connexion de canalisations flexibles en anneaux du type réalisé de manière à constituer un manchon en creux à coques semi cylindriques articulées entre elles avec une configuration cylindrique une fois fermé, et présentant un moyen de verrouillage, le dispositif étant constitué de deux coques semi cylindriques qui sont éloignées l'une de l'autre, non jointives en position d'ouverture, et reliées par une bande profilée de liaison et d'articulation formant charnières, est remarquable en ce que ladite bande est décalée en saillie vers l'extérieur par rapport à la ligne de jointement des deux coques et est établie dans le sens longitudinal des deux coques semi cylindriques et comprend une partie médiane épaisse et, de part et d'autre, deux zones de réduction d'épaisseur formant articulation, elles-mêmes raccordées chacune à une nervure longitudinale établie le long de la face apparente extérieure de chaque coque, et en ce que les deux nervurages se situent dans un plan sensiblement en retrait par rapport au chant intérieur longitudinal en regard de chaque coque, permettant d'obtenir un effet charnière des deux coques avec un décalage de la zone d'articulation, et ce qu'en situation fermée, les parties d'extrémités des coques, et leurs chants respectifs viennent en regard l'une de l'autre, tandis que la bande de liaison se trouver déportée en saillie extérieure selon une dimension correspondant à la hauteur des nervurages de liaison.

Les revendications dépendantes 2 à 10 concernent des modes particuliers de réalisation de l'objet de la revendication 1.

Pour bien fixer l'objet de l'invention illustrée d'une manière non limitative aux figures des dessins où :

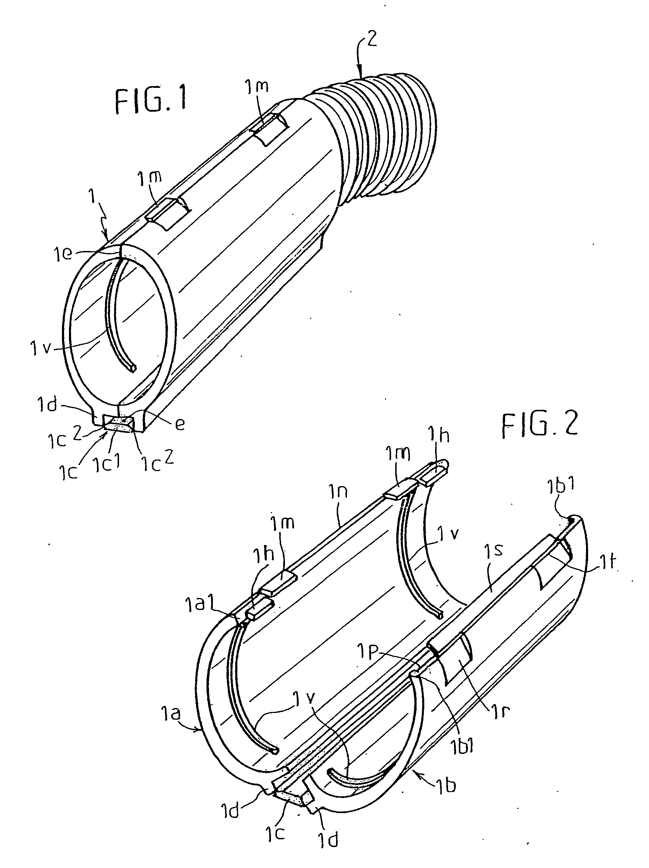

- la figure 1 est une vue illustrant un assemblage de canalisations à l'aide d'un dispositif de connexion, selon l'invention,
- la figure 2 est une vue en perspective du dispositif de connexion, selon l'invention, en situation de mi-ouverture,

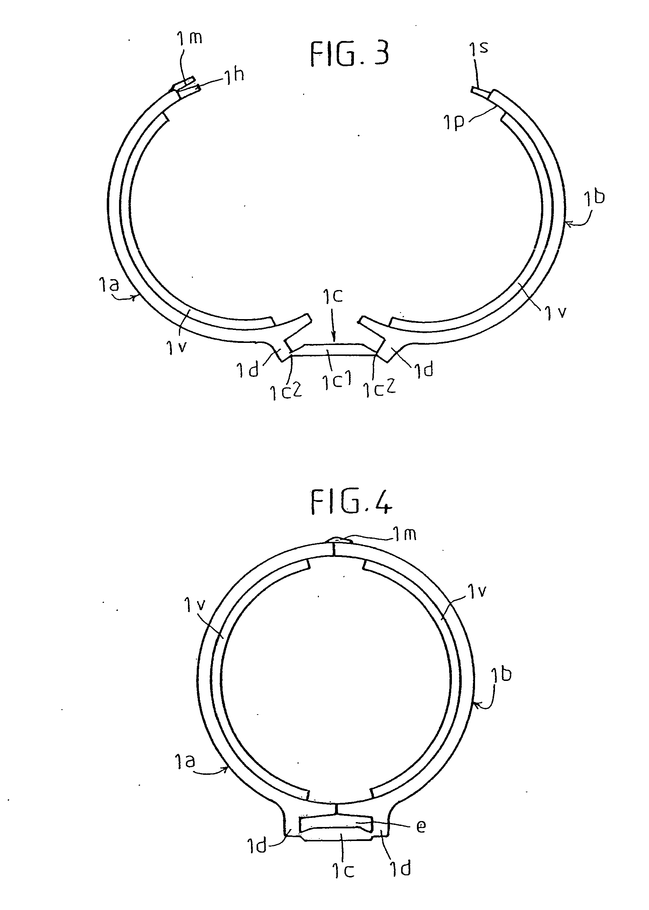

- la figure 3 est une vue de profil du dispositif de l'invention en situation d'ouverture,
- la figure 4 est une vue de profil du dispositif de l'invention en situation de fermeture,
- la figure 5 est une vue de dessus en position de mi-ouverture,

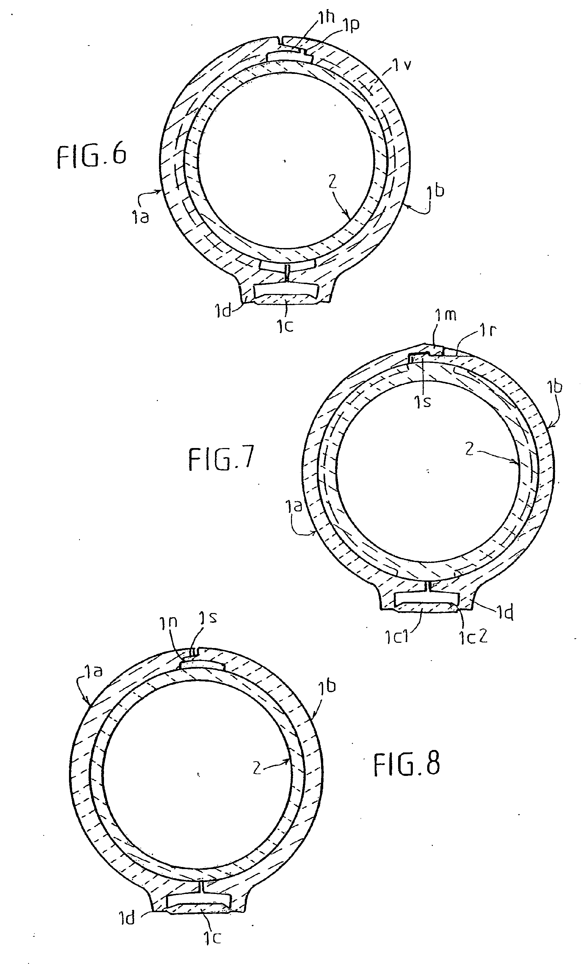

- la figure 6 est une vue en coupe transversale du dispositif selon la ligne A.A. de la figure 5,
- la figure 7 est une vue en coupe transversale du dispositif selon la ligne B.B. de la figure 5,
- la figure 8 est une vue en coupe transversale du dispositif selon la ligne C.C. de la figure 5,
- la figure 9 est une vue de dos de la partie du dispositif de connexion prêt à être positionné sur un plan d'appui.
- La figure 10 illustre une variante de réalisation du dispositif de connexion en position d'ouverture permettant d'assembler au moyen une canalisation flexible à anneaux et un tuyau ou tube rigide.
- La figure 11 est vue du dispositif de connexion selon la figure 10 dans une position fermée.

Afin de rendre plus concret l'objet de l'invention, on le décrit maintenant d'une manière non limitative illustrée aux figures des dessins.
Le dispositif de connexion, selon l'invention, est référencé dans son ensemble par (1). Il est réalisé de manière à constituer un manchon à configuration cylindrique une fois fermé, et il est réalisé en un matériau plastique rigide. Il est agencé pour autoriser le positionnement et le maintien de deux canalisations flexibles à anneaux (2) connues de l'art antérieur.

Selon l'invention, le dispositif de connexion est constitué de deux coques semi cylindriques (1a - 1b) qui sont éloignées l'une de l'autre, non jointives, et reliées par une bande profilée de liaison et d'articulation de portée (1c) disposée en saillie et formant charnières.

Plus particulièrement, ladite bande de liaison (1c) est établie dans le sens longitudinal des deux coques semi cylindriques et comprend une partie médiane (1c1) épaisse et, de part et d'autre, deux zones (1c2) de réduction d'épaisseur, elles-mêmes raccordées chacune à une nervure longitudinale (1d) établie le long de la face apparente extérieure de chaque coque (1a - 1b). La zone de réduction d'épaisseur (1c1) constitue ainsi une articulation de chaque coque par rapport à la bande de liaison (1c) et ainsi l'ouverture et l'écartement des coques (1a - 1b) précitées. Les deux nervurages (1d) se situent dans un plan sensiblement en retrait par rapport au chant intérieur longitudinal (1d) en regard de chaque coque. On obtient ainsi un effet charnière des deux coques avec un décalage de la zone d'articulation. En situation fermée, les parties d'extrémités (1a1 - 1b1) des coques, et leurs chants respectifs (1^{e}), viennent en regard l'une de l'autre, tandis que la bande de liaison (1c) se trouve déportée en saillie extérieure selon une dimension correspondant à la hauteur des nervurages (1d) de liaison. En position fermée, un espace (e) est établi entre la face intérieure de la bande de liaison et les extrémités correspondantes des coques, tandis que les chants (1e) viennent bout à bout.

Cette articulation particulière avec déport, par rapport aux deux coques, présente un autre avantage dans le sens d'une capacité d'une légère déformation longitudinale permettant de faciliter l'introduction et le positionnement des canalisations flexibles en cas de difficultés d'alignement de celles-ci.

Selon une autre disposition de l'invention, la face externe apparente de la bande de liaison peut constituer une zone de fixation sur un plan paroi ou autre, à l'aide d'un moyen adhésif (3) et, par exemple, ceux comprenant une zone adhésive (3b) et un film de protection (3a).

Selon une autre disposition de l'invention, les extrémités opposées (1g) des deux coques (1a - 1b) sont agencées avec des moyens permettant leur accrochage et fixation respectifs. A cet effet, la coque (1a) présente, près de chacune de ses extrémités, un couple de languettes (1h - 1m) disposées en saillie et en plan, de hauteur décalée, lesdites languettes étant profilées pour former crochet de retenue (1h1 - 1m1) par une surépaisseur en saillie transversale. Les languettes (1h) disposées près des extrémités transversales des coques sont sensiblement dans un plan inférieur à la périphérie des coques correspondantes, tandis que la languette (1m) est disposée adjacente mais reste dans le plan de la périphérie de la coque (1a). Entre celle-ci est prévue une zone de jonction (1n) participant à la fixation et liaison des coques entre elles.

La coque (1b) est agencée de manière complémentaire avec des couples de parties réceptrices (1p - 1r) et des couples de languettes (1h - 1m) précitées. Les parties réceptrices (1p - 1r) sont conformées dans l'épaisseur de la coque en regard. La partie réceptrice (1p) est établie avec une forme en évidement, côté intérieur, de réception de la languette (1h) de l'autre coque. La partie réceptrice (1r) est établie avec un évidement formé par l'épaisseur de la coque mais côté extérieur. Par ailleurs, une forme profilée en rampe (1s) est disposée entre les parties réceptrices, pour faciliter le guidage de fermeture. De plus, une saillie (1t) est disposée transversale pour former un moyen de retenue des languettes (1m) précitées. La liaison des coques est donc totale en s'intégrant dans l'épaisseur de celles-ci et sans saillie apparente, de sorte que le dispositif de connexion est parfaitement lisse à l'exception de la bande de liaison (1c) précitée.

En outre, les deux coques présentent des nervures transversales (1v) de liaison en étant susceptibles de s'encastrer dans les formes en creux établies entre les anneaux successifs des canalisations flexibles.

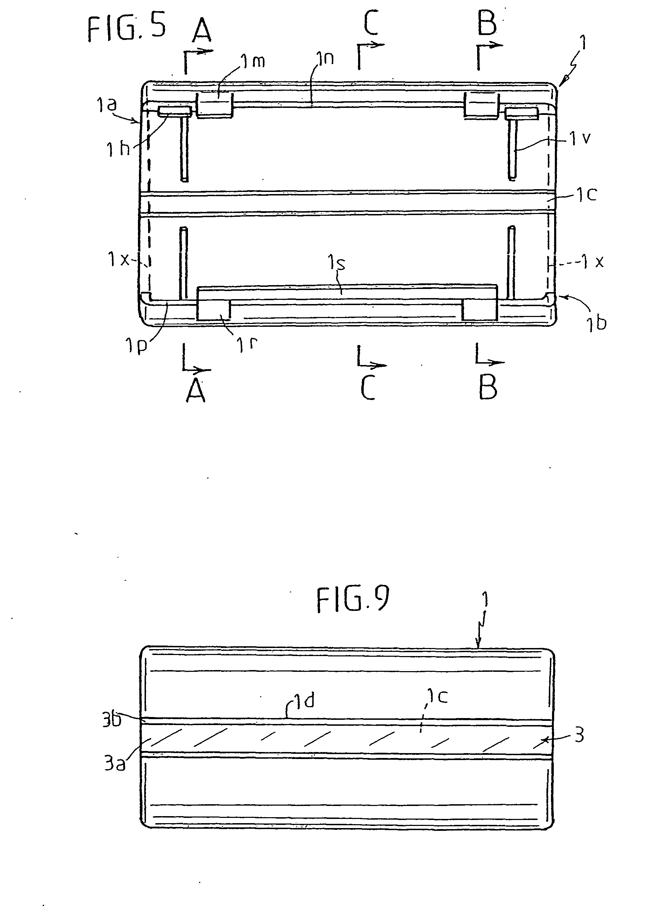

A titre complémentaire, les extrémités transversales des coques peuvent recevoir des lèvres (1x) débordantes et s'ajustant dans la zone en creux des anneaux des canalisations (traits interrompus figure 5).

Le dispositif de connexion, selon l'invention, est particulièrement pratique à utiliser face au concept de charnières déportées par rapport à la ligne de jonction des coques semi cylindriques.

L'ouverture et la séparation des coques entre elles est aisée, une légère flexibilité des languettes (1m) et ainsi leur dégagement pour permettre l'ouverture et l'accès à l'intérieur du dispositif de connexion.

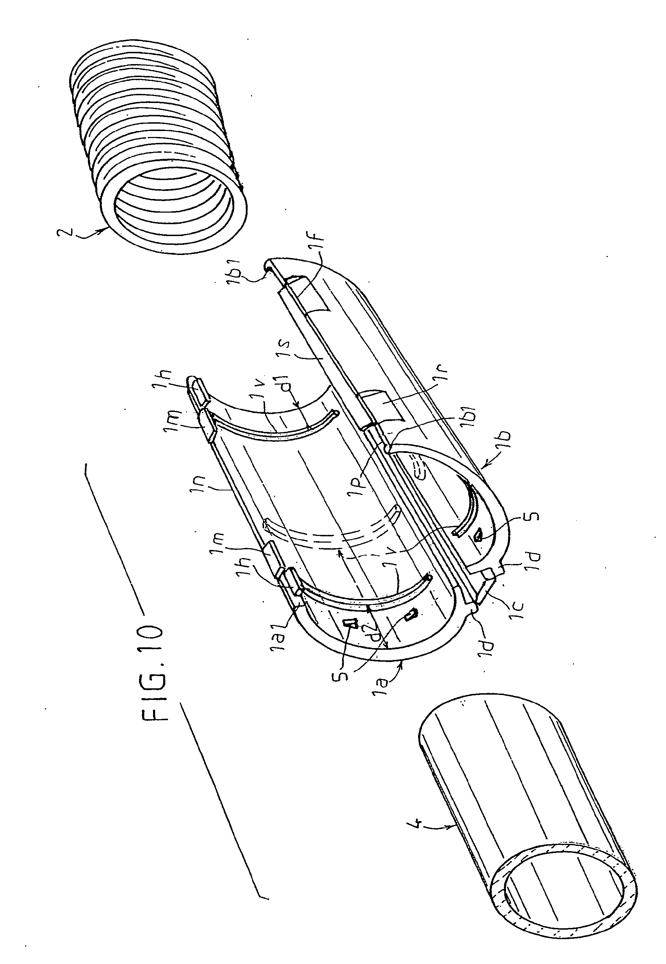

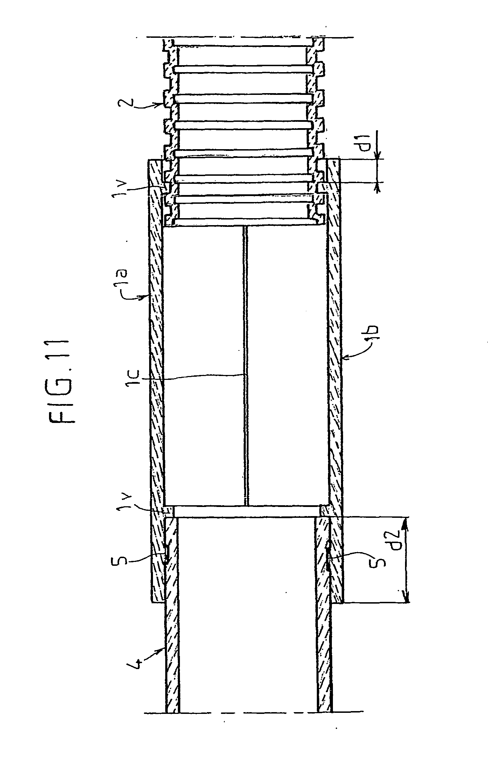

On a représenté aux figures 10 et 11 une variante de mise en oeuvre du dispositif de connexion de l'invention. Cette variante est ainsi réalisée pour permettre l'assemblage au moins d'un côté d'une canalisation flexible à anneaux (2) et sur l'autre côté, soit une canalisation flexible (2) soit un tube ou conduit rigide (4).
Dans cette mise en oeuvre l'une des nervures transversales (1v) de liaison est sensiblement décalée vers l'intérieur de la zone de jonction (1n) afin de permettre une plus grande pénétration du conduit (4) ou tube rigide. A cet effet, la distance de pénétration (d2) à l'intérieur du dispositif de connexion est plus grande avec un enserrage et tenue améliorée du tube rigide. Cette distance (d2) est supérieure à la distance (d1) correspondant au positionnement de la canalisation flexible sur la nervure transversale (1v) correspondante.

Ladite nervure transversale (1v) décalée permet cependant si besoin est la retenue d'une seconde canalisation flexible à anneaux dans les mêmes conditions que précédemment. Le conduit vient en butée contre la nervure.
A titre complémentaire, le dispositif de connexion qui est susceptible de recevoir le conduit rigide (4) ou tube peut être agencé avec des empreintes (5) en saillie à l'entrée pour faciliter la prise et retenue du conduit. Avec cette mise en oeuvre particulière, le dispositif de connexion de canalisation trouve une plus large utilisation d'au moins une canalisation flexible à anneaux associée à une autre canalisation flexible ou à un conduit ou tube rigide, l'ensemble étant parfaitement tenu.

## Revendications

1. Dispositif de connexion de canalisations flexibles en anneaux du type réalisé de manière à constituer un manchon en creux à coques semi cylindriques articulées entre elles avec une configuration cylindrique une fois fermé, et présentant un moyen de verrouillage, le dispositif étant constitué de deux coques semi cylindriques (1a - 1b) qui sont éloignées l'une de l'autre, non jointives en position d'ouverture, et reliées par une bande profilée de liaison et d'articulation formant charnières, **caractérisé en ce que** ladite bande (1c) est décalée en saillie vers l'extérieur par rapport à la ligne de jointement des deux coques et est établie dans le sens longitudinal des deux coques semi cylindriques et comprend une partie médiane (1c1) épaisse et, de part et d'autre, deux zones (1c2) de réduction d'épaisseur formant articulation, elles-mêmes raccordées chacune à une nervure longitudinale (1d) établie le long de la face apparente extérieure de chaque coque (1a - 1b),
**et en ce que** les deux nervurages (1d) se situent dans un plan sensiblement en retrait par rapport au chant intérieur longitudinal en regard de chaque coque, permettant d'obtenir un effet charnière des deux coques avec un décalage de la zone d'articulation,
**et en ce que,** en situation fermée, les parties d'extrémités (1a1 - 1b1) des coques, et leurs chants respectifs (1^{e}) viennent en regard l'une de l'autre, tandis que la bande de liaison (1c) se trouver déportée en saillie extérieure selon une dimension correspondant à la hauteur des nervurages (1d) de liaison.

2. Dispositif, selon la revendication 1, **caractérisé en ce que,** en position fermée, un espace (e) est établi entre la face intérieure de la bande de liaison et les extrémités correspondantes des coques, tandis que les chants (1^{e}) viennent bout à bout.

3. Dispositif, selon la revendication 1, **caractérisé en ce que** la face externe apparente de la bande de liaison constitue une zone de fixation sur un plan paroi ou autre, à l'aide d'un moyen adhésif (3) comprenant une zone adhésive (3b) et un film de protection (3a).

4. Dispositif, selon la revendication 1, **caractérisé en ce que** les extrémités opposées (1g) des deux coques (1a - 1b) sont agencées avec des moyens permettant leur accrochage et fixation respectifs,
**et en ce que** la coque (1a) présente, près de chacune de ses extrémités, un couple de languettes (1h - 1m) disposées en saillie et en plan, de hauteur décalée, lesdites languettes étant profilées pour former crochet de retenue (1h1 - 1m1) par une surépaisseur en saillie transversale,
**et en ce que** la coque (1b) est agencée de manière complémentaire avec des couples de parties réceptrices (1p - 1r) et couples de languettes (1h - 1m) précitées, les parties réceptrices (1p - 1r) étant conformées dans l'épaisseur de la coque en regard.

5. Dispositif, selon la revendication 4, **caractérisé en ce que** les languettes (1h) disposées près des extrémités transversales des coques sont sensiblement dans un plan inférieur à la périphérie des coques correspondantes, tandis que la languette (1m) est disposée adjacente mais reste dans le plan de la périphérie de la coque (1a),
**et en ce que,** entre celle-ci, est prévue une zone de jonction (1n) participant à la fixation et liaison des coques entre elles,
**et en ce que** la partie réceptrice (1p) est établie avec une forme en évidemment côté intérieur de réception de la languette (1h) de l'autre coque,
**et en ce que** la partie réceptrice (1r) est établie avec un évidemment formé par l'épaisseur de la coque mais côté extérieur,
**et en ce que** une forme profilée en rampe (1s) est disposée entre les parties réceptrices, pour faciliter le guidage de fermeture.

6. Dispositif, selon la revendication 5, **caractérisé en ce que** une saillie (1t) est disposée transversale pour former un moyen de retenue des languettes (1m) précitées.

7. Dispositif, selon la revendication 1, **caractérisé en ce que** les deux coques présentent des nervures transversales (1v) de liaison en étant susceptibles de s'encastrer dans les formes en creux établies entre les anneaux successifs des canalisations flexibles.

8. Dispositif, selon la revendication 1, **caractérisé en ce que** les extrémités transversales des coques peuvent recevoir des lèvres (1x) débordantes et s'ajustant dans la zone en creux des anneaux des canalisations.

9. Dispositif selon l'une quelconque des revendications 1 à 8 **caractérisé en ce que** l'une des nervures transversale (1v) est décalée vers l'intérieur du dispositif de connexion à l'endroit de la zone de jonction en permettant soit le positionnement d'une canalisation flexible à anneaux (2), soit la mise en butée d'un conduit rigide ou tube (4) engagé dans une plus grande distance (d2) et enserrée entre les parties du dispositif de connexion.

10. Dispositif selon la revendication 9, **caractérisé en ce que** des empreintes en saillie (5) sont établies sur l'un des côtés correspondant à l'entrée du dispositif de connexion pour la mise en position du tube ou conduit rigide.

## Claims

1. A corrugated hose coupling device of the type made to constitute a hollow sleeve with semi-cylindrical shells articulated to each other in a cylindrical configuration when closed and having a means of locking, the device consisting of two semi-cylindrical shells (1a-1b) that are held apart and non abutting in their opened position and connected by a profiled connecting and articulating strip forming a hinge, **characterised in that** said strip (1c) is protrudingly, outwardly offset relative to the joint line of the two shells and is in the longitudinal direction of the two semi-cylindrical shells and comprises a thick middle part (1c1) and, either side, two areas (1c2) of reduced thickness forming an articulation, each of these areas being connected to a longitudinal rib (1d) along the external visible surface of each shell (1a-1b),
**and in that** the two ribs (1d) are located in a plane substantially retracted relative to the opposite-facing internal longitudinal edge of each shell, making it possible to obtain hinging of the two shells with displacement of the articulation area,
**and in that** when closed, end parts (1a1-1b1) of the shells and their respective edges (1^{e}) fit against each other whereas connecting strip (1c) is protrudingly, outwardly offset by a dimension equivalent to the height of connecting ribs (1d).

2. A device as claimed in claim 1, **characterised in that,** when closed, a gap (e) is left between the internal surface of the connecting strip and the corresponding ends of the shells whereas edges (1^{e}) fit against each other end to end.

3. A device as claimed in claim 1, **characterised in that** the visible external surface of the connecting strip constitutes an area for fixing on a flat wall or other structure by using an adhesive means (3) comprising an adhesive area (3b) and a protective film (3a).

4. A device as claimed in claim 1, **characterised in that** the opposite ends (1g) of two shells (1a-1b) are designed with means allowing their respective fastening and fixing,
**and in that** shell (1a) has, close to each of its ends, a pair of planar, protruding tabs (1h-1m) of offset height, said tabs being shaped to form a retention hook (1h1-1m1) by a transverse protruding extra thickness,
**and in that** shell (1b) is designed to match pair of receiving parts (1p-1r) and above-mentioned pairs of tabs (1h-1m), receiving parts (1p-1r) being shaped in the thickness of the opposite-facing shell.

5. A device as claimed in claim 4, **characterised in that** tabs (1h) located close to the transverse ends of the shells are substantially in a plane below the periphery of the corresponding shells, whereas tab (1m) is located adjacent but remains in the same plane as the periphery of shell (1a),
**and in that,** between the latter, there is a junction area (1n) involved in fixing and connecting the shells to each other,
**and in that** receiving part (1p) has an inwardly hollowed out shape to receive tab (1h) of the other shell,
**and in that** receiving part (1r) has an opening formed by the thickness of the shell but on the outer side,
**and in that** a ramp shape (1s) is located between these receiving parts in order to facilitate guidance when closing.

6. A device as claimed in claim 5, **characterised in that** there is a transverse protrusion (1t) in order to form means of retaining above-mentioned tabs (1m).

7. A device as claimed in claim 1, **characterised in that**, the two shells have transverse coupling ribs (1v) capable of flush fitting into the hollowed out shapes between the successive corrugations of the hoses.

8. A device as claimed in claim 1, **characterised in that** the transverse ends of the shells can accommodate protruding lips (1x) that fit into the hollowed out area of the corrugations of the hoses.

9. A device as claimed in any of claims 1 to 8, **characterised in that** one of transverse ribs (1v) is offset towards the inside of the coupling device at the location of the junction area allowing either positioning of a corrugated hose (2) or limit stopping of a rigid conduit or tube (4) engaged to a greater depth (d2) and gripped between the parts of the coupling device.

10. A device as claimed in claim 9, **characterised in that** there are protruding bumps (5) on one of the ends corresponding to the coupling device's entry in order to position the tube or rigid conduit.

## Patentansprüche

1. Vorrichtung zum Verbinden von flexiblen Rohrleitungen mit Ringen, welche eine hohle Muffe aus halb-zylinderförmigen Schalen bildet, die zueinander, wenn sie geschlossen sind, gelenkartig und zylinderförmig angeordnet sind, und Einrastmittel aufweist, wobei die Vorrichtung aus zwei halb-zylinderförmigen Schalen (1a - 1b) gebildet ist, die voneinander entfernt sind und in geöffneter Position nicht fugendicht sind, und die durch ein Profilband zur Verbindung und als Scharnier bildendes Gelenk verbunden sind, **dadurch gekennzeichnet, dass** das Band (1c) bezogen auf die Linie des Zusammenfügens der beiden Schalen nach außen überstehend versetzt ist und in Längsrichtung der beiden halb-zylinderförmigen Schalen gebildet ist und einen verdickten Mittelteil (1c1) sowie auf beiden Seiten zwei Zonen (1c2) verringerter Dicke aufweist, die ein Gelenk bilden und wiederum jeweils mit einer Längsrippe (1d) verbunden sind, die entlang der gegenüberliegenden Außenseite jeder Schale (1a - 1b) gebildet ist,
und **dadurch gekennzeichnet, dass** die beiden Rippen (1d) in einer im Wesentlichen vertieften Ebene bezogen auf die Längskante gegenüber jeder Schale angeordnet sind, wodurch ermöglicht wird, eine Scharnierwirkung der beiden Schalen mit einem Versatz der Gelenkzone zu erhalten,
und **dadurch gekennzeichnet, dass** in geschlossener Position die beiden Endteile (1a1 - 1b1) der Schalen sowie ihre entsprechenden Seiten (1e) ineinander greifen, sobald das Verbindungsband (1c) nach außen überstehend mit einem Abstand versetzt ist, welcher der Höhe der Rillen (1d) zur Verbindung entspricht.

2. Vorrichtung gemäß Anspruch 1, **dadurch gekennzeichnet, dass** in geschlossener Position ein Raum (e) zwischen der Innenseite des Verbindungsbands und den entsprechenden Enden der Schalen gebildet wird, sobald die Seiten (1e) aneinander kommen.

3. Vorrichtung gemäß Anspruch 1, **dadurch gekennzeichnet, dass** die sichtbare Außenseite des Verbindungsbands eine Zone zur Befestigung auf einer ebenen Wand oder anderem mittels einem Klebstoff (3) bildet, der eine Klebezone (3b) sowie einen Schutzfilm (3a) aufweist.

4. Vorrichtung gemäß Anspruch 1, **dadurch gekennzeichnet, dass** die gegenüberliegenden Enden (1g) der beiden Schalen (1a - 1b) mit Mitteln angeordnet sind, die ihr jeweiliges Verhaken und Befestigen ermöglichen,
und **dadurch gekennzeichnet, dass** die Schale (1a) jeweils nahe ihres Endes ein Paar Laschen (1h - 1m) aufweist, die überstehend und in einer Ebene mit versetzter Höhe angeordnet sind, wobei die Laschen profiliert sind, um Rückhaltehaken (1h1 - 1m1) durch eine überstehende, quer verlaufende Überdicke zu bilden,
und **dadurch gekennzeichnet, dass** die Schale (1b) komplementär zu den Paaren der Aufnahmeteile (1p - 1r) und den Paaren der Laschen (1h - 1m) angeordnet ist, wobei die Aufnahmeteile (1p - 1r) in der Dicke der gegenüberliegenden Schale entsprechen.

5. Vorrichtung gemäß Anspruch 4, **dadurch gekennzeichnet, dass** die Laschen (1h), die in der Nähe der Querenden der Schalen angeordnet sind, im Wesentlichen in einer tieferen Ebene liegen als der Umfang der jeweiligen Schalen, wohingegen die Lasche (1m) angrenzend angeordnet ist, aber in der Ebene des Umfangs der Schale (1a) bleibt,
und **dadurch gekennzeichnet, dass** zwischen diesen eine Verbindungszone (1n) vorgesehen ist, die zur Befestigung und Verbindung der beiden Schalen miteinander beiträgt,
und **dadurch gekennzeichnet, dass** der Aufnahmeteil (1p) mit einer Aussparung an der Innenseite zur Aufnahme der Lasche (1h) der anderen Schale gebildet ist,
und **dadurch gekennzeichnet, dass** der Aufnahmeteil (1r) mit einer Aussparung gebildet ist, die durch die Dicke der Schale gebildet ist, aber an der Außenseite,
und **dadurch gekennzeichnet, dass** eine als Rampe profilierte Form (1s) zwischen den Aufnahmeteilen angeordnet ist, um das Führen zum Schließen zu erleichtern.

6. Vorrichtung gemäß Anspruch 5, **dadurch gekennzeichnet, dass** ein Überstand (1t) quer angeordnet ist, um ein Rückhaltemittel für die Laschen (1m) zu bilden.

7. Vorrichtung gemäß Anspruch 1, **dadurch gekennzeichnet, dass** die beiden Schalen Querrippen (1v) zur verbindung aufweisen, die geeignet sind, in die Hohlräume einzurasten, die zwischen den aufeinanderfolgenden Ringen der flexiblen Rohrleitungen gebildet sind.

8. Vorrichtung gemäß Anspruch 1, **dadurch gekennzeichnet, dass** die Querenden der Schalen die vorstehenden Lippen (1x) aufnehmen können und sich in die hohle Zone der Ringe der Rohrleitungen einpassen.

9. Vorrichtung gemäß einem der Ansprüche 1 bis 8, **dadurch gekennzeichnet, dass** eine der Querrippen (1v) zum Innern der Vorrichtung zum Verbinden im Bereich der Verbindungszone versetzt ist, wodurch entweder die Positionierung einer biegsamen Rohrleitung mit Ringen ermöglicht wird oder das in Anschlag Bringen einer starren Leitung oder eines Schlauchs (4), die/der mit einem größeren Abstand (d2) eingesetzt wird und von den Teilen der Vorrichtung zum Verbinden umklammert wird.

10. Vorrichtung gemäß Anspruch 9, **dadurch gekennzeichnet, dass** überstehende Stempel (5) für das Positionieren des Schlauchs oder der starren Leitung auf einer der entsprechenden Seiten am Eingang der Vorrichtung zum Verbinden gebildet sind.
